# FASCICULE DE BREVET EUROPEEN

(11) **EP 4 082 156 B1**
(45) Date de publication et mention de la délivrance du brevet: **12.02.2025**
(21) Numéro de dépôt: 20833904.4
(22) Date de dépôt: 22.12.2020
(51) Int. Cl.: H04L 12/10, E06B 9/72, E06B 9/62

(54) **ACTIONNEUR ÉLECTROMÉCANIQUE D'ENTRAÎNEMENT D'UN ÉCRAN DE FERMETURE OU DE PROTECTION SOLAIRE, INSTALLATION DE FERMETURE OU DE PROTECTION SOLAIRE COMPRENANT UN TEL ACTIONNEUR ET PROCÉDÉ DE DIMENSIONNEMENT D'UN RESSORT DE COMPENSATION D'UNE GAMME DE STORES INTÉGRANT, CHACUN, UN TEL ACTIONNEUR**
ELEKTROMECHANISCHER AKTUATOR ZUM ANTRIEB EINES VERSCHLUSSES ODER SONNENSCHUTZSCHIRMES, VERSCHLUSS- ODER SONNENSCHUTZSYSTEM MIT EINEM SOLCHEN AKTUATOR UND VERFAHREN ZUR DIMENSIONIERUNG EINER KOMPENSATIONSFEDER FÜR EINE REIHE VON JALOUSIEN MIT JE EINEM SOLCHEN AKTUATOR
ELECTROMECHANICAL ACTUATOR FOR DRIVING A CLOSURE OR SUN PROTECTION SCREEN, CLOSURE OR SUN PROTECTION SYSTEM COMPRISING SUCH AN ACTUATOR AND METHOD FOR DIMENSIONING A COMPENSATION SPRING FOR A RANGE OF BLINDS EACH INCORPORATING SUCH AN ACTUATOR

(30) Priorité: 23.12.2019 FR 1915441
(43) Date de publication de la demande: 02.11.2022
(73) Titulaire: Somfy Activites SA, 74300 Cluses (FR)
(72) Inventeur: ANNYCKE, Xavier, 74300 Cluses (FR); NEGRELLO, Frédéric, 74300 Cluses (FR); MARAVAL, Frédéric, 74300 Cluses (FR); LAMBERSEND, Bruno, 74300 Cluses (FR); BURDET, Lionel, 74300 Cluses (FR); LAGARDE, Eric, 74300 Cluses (FR)
(74) Mandataire: Lavoix
(86) Numéro de dépôt international: PCT/EP2020/087684
(87) Numéro de publication internationale: WO 2021/130258

(56) Documents cités:
- EP-A1- 3 093 623
- WO-A1-2019/043565
- WO-A2-2006/107602
- US-A1- 2013 099 714
- US-A1- 2019 100 961

## Description

La présente invention concerne un actionneur électromécanique d'entraînement d'un écran mobile de fermeture ou de protection solaire, selon le préambule de la revendication 1. Un tel actionneur est connu de US 2013/099714 A1.

La présente invention concerne également une installation de fermeture ou de protection solaire comprenant un tel actionneur, selon la revendication 5, ainsi qu'un procédé de dimensionnement d'un ressort de compensation pour une gamme de stores intégrant, chacun, un tel actionneur, selon la revendication 6.

De tels actionneurs pour des installations de fermeture ou de protection solaire, notamment pour l'entraînement de stores d'intérieur, sont généralement de forme tubulaire pour être insérés dans un tube d'enroulement sur lequel s'enroule l'écran de fermeture ou de protection solaire. Ils peuvent être alimentés par le biais de sources d'alimentation autonomes, telles que des batteries rechargeables ou des piles. L'actionneur doit être conçu pour permettre un fonctionnement sur du long terme en prenant en compte les potentielles difficultés de réapprovisionnement en énergie.

On connait dans l'art antérieur des installations de store à rouleau munis d'un ressort de compensation précontraint. De telles installations utilisent le ressort de compensation pour permettre de limiter les efforts pour relever le store, en augmentant la précontrainte du ressort au cours d'un mouvement de déploiement du store. De tels ressorts sont utilisés dans des installations manuelles, mais également dans des installations motorisées par un actionneur électromécanique, pour limiter notamment l'énergie électrique nécessaire pour déplacer le store sur un cycle de montée-descente. Ils sont donc bien adaptés pour des actionneurs dont la source d'énergie est autonome. Le ressort de compensation peut être situé dans un tube d'enroulement sur lequel s'enroule le store, à l'opposé de l'actionneur électromécanique, ou sur le corps de l'actionneur électromécanique, ou au niveau de l'arbre de sortie de l'actionneur électromécanique. La précontrainte doit tenir compte notamment du nombre de tours que le tube d'enroulement doit effectuer entre un point haut et un point bas du store, autrement dit entre une position complètement enroulée du store et une position complètement déroulée. Parallèlement, il est possible de choisir une raideur du ressort de compensation à utiliser pour un store, notamment en prenant en compte la puissance mécanique à fournir au store pour déplacer celui-ci.

Cependant, la définition d'une raideur de ressort de compensation par store augmente le coût des installations comprenant de tels stores.

Une autre source d'énergie disponible notamment dans les bâtiments tertiaires ou dans les nouvelles constructions résidentielles est l'alimentation via un réseau Ethernet. La technologie PoE (de l'anglais « Power over Ethernet ») permet d'utiliser un réseau Ethernet à la fois pour une alimentation électrique des charges électriques dans le bâtiment et pour une transmission de données qui sont, par exemple, des signaux de commandes des charges électriques.

La technologie PoE est basée sur la norme pour les réseaux informatiques éditées par l'IEEE (de l'anglais « Institute of Electrical and Electronics Engineers ») sous la référence 802.3 :
- la norme IEEE 802.3af (PoE) fournit une puissance maximum de 15W pour une tension en entrée de 46 à 57 VDC.
- la norme IEEE 802.3at (PoE+) fournit une puissance maximum de 30W pour une tension en entrée de 52 à 57 VDC.
- la norme IEEE 802.3bt (High Power PoE) fournit une puissance maximum de 100W pour une tension en entrée de 52 à 57 VDC.

Les câbles Ethernet adaptés pour la transmission de l'alimentation et des données comprennent quatre paires de fils. Les données sont transmises sur au moins deux paires de fils, à savoir les fils numérotés 1, 2, 3 et 6 tandis que l'alimentation est transmise sur au moins deux autres paires de fils, à savoir les fils numérotés 4, 5, 7, 8.

Dans le domaine des actionneurs pour des installations de fermeture ou de protection solaire, les moteurs alimentés par une source d'alimentation, telle que des batteries, sont généralement des moteurs à courant continu à balais et collecteurs, prévus pour fonctionner sous une tension de 12V ou de 24V.

Dans le cas de la technologie PoE, la tension nominale est de l'ordre de 48V. Les moteurs à courant continu alimentés directement en 48v sont complexes à obtenir, du fait de l'échauffement important au niveau des balais et des collecteurs pour ces niveaux de tension. La tension s'avère en effet forte pour le nombre de balais et collecteurs, notamment dans des encombrements réduits tels que ceux d'un tube d'enroulement pour un écran de fermeture ou de protection solaire dont le diamètre est de 60mm, 50mm ou moins.

De ce fait, le moteur étant prévu pour supporter une tension plus faible que celle fournie par la connexion Ethernet, il est nécessaire dans un actionneur alimenté selon la technologie PoE d'utiliser un convertisseur pour éviter d'endommager le moteur. Cependant, l'utilisation d'un convertisseur implique un coût supplémentaire et une complexité augmentée, ainsi qu'un encombrement important qui peut être problématique lorsqu'une solution compacte est nécessaire. D'autre part, l'utilisation d'un convertisseur pénalise le rendement électrique de l'actionneur.

C'est à ces inconvénients qu'entend plus particulièrement remédier l'invention en proposant un actionneur électromécanique d'entraînement d'un écran de fermeture ou de protection solaire plus compact, disposant d'un rendement électrique optimisé par rapport à celui d'un actionneur avec un convertisseur.

A cet effet, l'invention concerne un actionneur électromécanique d'entraînement d'un écran mobile de fermeture ou de protection solaire, l'actionneur comprenant un moteur, une carte de commande, un frein, un réducteur et un connecteur de liaison à une source d'alimentation en énergie. Selon l'invention, le connecteur comprend huit contacts électriques, le connecteur étant notamment de type RJ45, pour l'alimentation de l'actionneur et la transmission de données à partir d'un réseau Ethernet, le moteur est un moteur synchrone comprenant un stator bobiné et un rotor à aimants permanents, le moteur étant adapté pour fonctionner directement sous la tension fournie par le réseau Ethernet, le bobinage du stator étant conçu pour supporter une tension de 36V à 57V, de préférence une tension entre 46V et 57V, en particulier une tension d'environ 48 V.

Grâce à l'invention, la présence d'un moteur synchrone à aimants permanents sans balai, prévu pour fonctionner sous une tension, par exemple, égale à environ 48 V, ne nécessite pas l'ajout d'un convertisseur. En effet, le moteur est prévu pour supporter la tension du courant fourni par le biais de la connexion Ethernet. Cela implique également un gain de place au sein de l'actionneur, qui est d'autant plus important que le diamètre de l'actionneur est petit. D'autre part, les fils utilisés pour le bobinage du stator d'un moteur synchrone à aimants permanents ont un diamètre inférieur à celui d'un moteur de même type, fournissant un même couple et conçu pour fonctionner à 12V ou 24V. Ceci permet un coefficient de remplissage plus important et donc un rendement électrique plus élevé du moteur. Or la puissance électrique qui peut être fournie par le biais des câbles PoE étant limitée, il est important d'optimiser le rendement électrique de l'actionneur électromécanique.

Selon des aspects avantageux mais non obligatoires de l'invention, un tel actionneur inclut une ou plusieurs des caractéristiques suivantes, prises selon toute combinaison techniquement admissible :
- Le diamètre maximum de l'actionneur est inférieur à 60 mm, en particulier inférieur 50mm.
- L'actionneur comprend un ressort de compensation.
- Le ressort de compensation est précontraint, un nombre de tours de précontrainte étant adapté à une raideur du ressort de compensation et déterminé pour minimiser une puissance maximale électrique à fournir par le moteur.

Selon un autre aspect, l'invention concerne une installation de fermeture ou de protection solaire comprenant un store équipé d'un écran et un actionneur tel que mentionné ci-dessus.

Selon encore un autre aspect, l'invention concerne un procédé de dimensionnement d'un ressort de compensation pour une gamme de stores de largeurs et de hauteurs différentes, chaque store intégrant un actionneur tel que décrit ci-dessus. Selon l'invention ce procédé comprend au moins les étapes suivantes. Tout d'abord, dans une étape a) la gamme de stores à équiper de ressorts de compensation est choisie. Ensuite, dans une étape b), une gamme de raideurs de ressorts de compensation à tester est choisie. Puis, dans une étape c), pour chaque raideur de la gamme de m raideurs, le comportement des n stores est déterminé. Dans une étape d), une unique raideur adaptée à toute la gamme de stores est sélectionnée parmi les raideurs de la gamme de m raideurs en fonction du comportement des n stores déterminé à l'étape c).

Ce procédé induit les mêmes avantages que ceux mentionnés ci-dessus au sujet de l'actionneur alimenté par Ethernet.

Selon des aspects avantageux mais non obligatoires de l'invention, un tel procédé inclut une ou plusieurs des caractéristiques suivantes, prises selon toute combinaison techniquement admissible :
- l'étape c) comprend des sous-étapes. Une première sous-étape e) consiste à calculer, pour une raideur, une puissance maximum à fournir par le moteur sur un cycle de montée et descente du store et à stocker cette valeur dans une mémoire pour chaque store de la gamme de store considérée. Une deuxième sous-étape f) consiste à choisir, pour chaque raideur la puissance électrique maximum à fournir la plus importante parmi les puissances électriques maximum calculées à la sous-étape e) et stocker cette valeur, ainsi que la raideur associée, dans la mémoire.
- la raideur sélectionnée à l'étape d) est la raideur associée à la puissance la plus faible, choisie dans les raideurs de l'étape f).
- la puissance électrique maximum délivrée pour chaque store dépend du couple maximal à fournir en position complètement déroulée du store et du rendement électrique du moteur.

L'invention sera mieux comprise et d'autres avantages de celle-ci apparaîtront plus clairement à la lumière de la description qui va suivre d'un mode de réalisation d'un actionneur électromécanique d'entraînement d'un écran mobile de fermeture ou de protection solaire, d'une installation de fermeture ou de protection solaire et d'un procédé de dimensionnement d'un ressort de compensation conformes à son principe, donnée uniquement à titre d'exemple et fait en référence aux dessins, dans lesquels :
[Fig 1] la figure 1 est un schéma d'une installation conforme à l'invention incorporant un actionneur,
[Fig 2] la figure 2 est une représentation schématique électronique d'un actionneur conforme à l'invention ;
[Fig 3] la figure 3 est un schéma d'un réseau domotique comprenant un actionneur conforme à l'invention ;
[Fig 4] la figure 4 est un schéma d'un procédé de dimensionnement d'un ressort de compensation selon l'invention.
[Fig 5] la figure 5 est une coupe transversale du moteur électrique de l'actionneur conforme à un mode de réalisation.

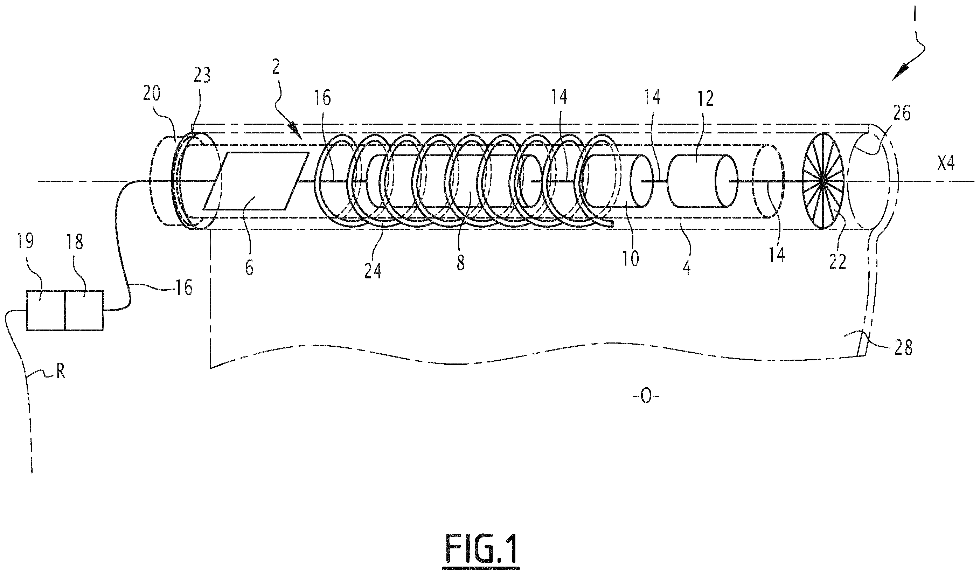

Une installation I de protection solaire, qui comprend un actionneur électromécanique 2 destiné à être alimenté par un réseau Ethernet R, est représentée schématiquement sur la figure 1.

L'installation I comprend également un store motorisé comme équipement domotique. Le store motorisé comprend notamment un écran 28 et un arbre d'enroulement 26, sur lequel s'enroule l'écran 28.

L'actionneur électromécanique 2 est disposé au moins partiellement dans l'arbre d'enroulement 26, qui a la forme d'un tube d'enroulement. Il fournit un entrainement en rotation du tube d'enroulement 26 par le biais d'une liaison 14, telle qu'un arbre de sortie. L'actionneur 2 comprend un carter 4, représenté en pointillés sur la figure 1, définissant un axe X4.

Le carter 4 renferme une carte de commande 6, un moteur 8, un frein 10 et un réducteur 12 qui appartiennent à l'actionneur 2 et sont alignés, dans cet ordre, le long de l'axe X4 et qui sont reliés les uns aux autres par des liaisons 14 et 16.

Les liaisons 14 sont des liaisons mécaniques entre le moteur 8 et le frein 10 et entre le frein 10 et le réducteur 12. La liaison 16 est une liaison électronique entre la carte de commande 6 et le moteur 8.

Le moteur 8 est un moteur à courant continu et à commutation électronique sans balais, communément appelé moteur BLDC (de l'anglais « BrushLess Direct Current»), ou, de manière plus générale, un moteur synchrone à aimants permanents PMSM (de l'anglais « Permanent Magnet Synchronous Motor »).

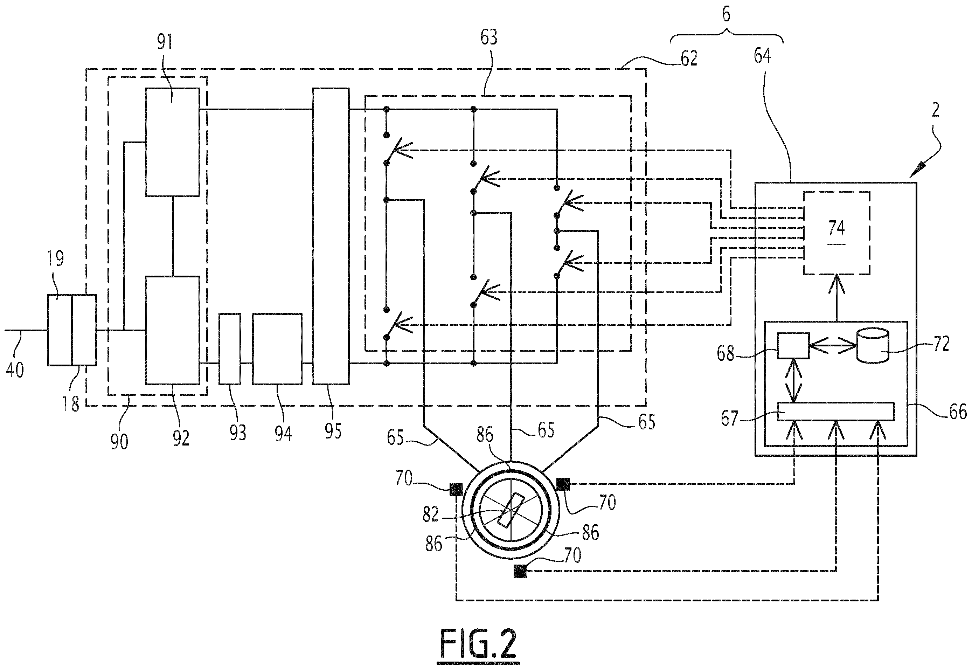

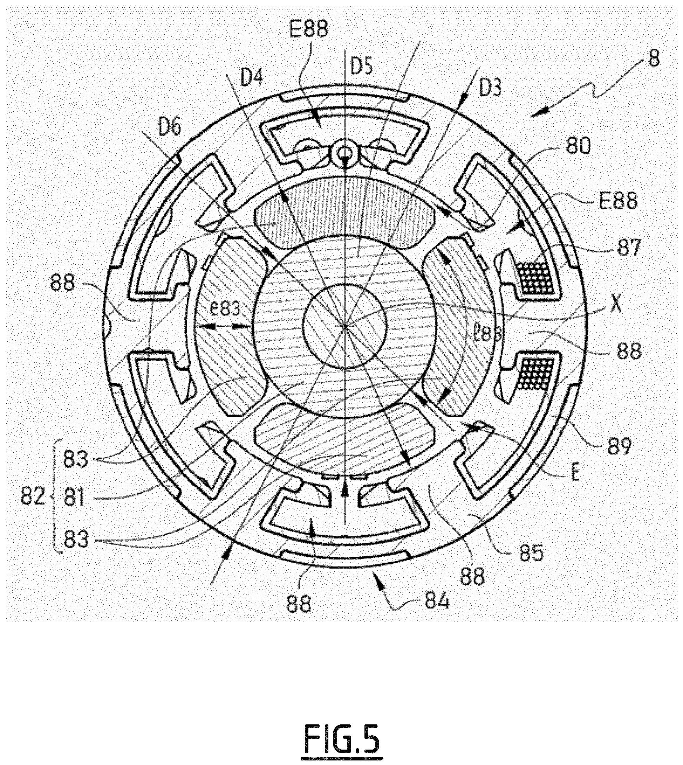

On décrit à présent, plus en détail et en référence aux figures 2 et 5 le moteur électrique 8 de l'actionneur électromécanique 2. Le moteur 8 comporte un rotor 82 à aimants permanents et un stator 84 comprenant un bobinage 87 formé par des enroulements 86 alimentés électriquement par des lignes d'alimentation 65 connectées à un circuit d'alimentation 62. Par exemple, le rotor 82 est connecté, indirectement, à l'arbre d'enroulement 26.

On note D3 le diamètre extérieur du moteur électrique 8, ce diamètre étant, en pratique, égal au diamètre extérieur du stator 84.

Le rotor 82 comprend un corps de rotor 81, muni d'éléments magnétiques 83 entourés par le stator 84. Les éléments magnétiques 83 sont disposés sur la circonférence extérieure du corps de rotor 81. Les éléments magnétiques 83 du rotor 82 sont des aimants permanents en ferrite.

Les éléments magnétiques 83 sont séparés du stator 84 par un entrefer 80, radial par rapport à l'axe de rotation X.

On note e88 l'épaisseur radiale des éléments magnétiques 83, qui est mesurée selon une direction radiale à l'axe X. Cette épaisseur e88 est choisie supérieure à 3 mm, de préférence entre 3,8 et 4,2 mm, ce qui contribue à fournir les efforts électromagnétiques nécessaires au fonctionnement du moteur, participe à la faisabilité industrielle des aimants permanents et limite les risques de démagnétisation de ceux-ci. Les éléments magnétiques ou aimants permanents 83 peuvent être rapportés sur la circonférence extérieure du corps de rotor 81 par collage, surmoulage ou toute autre technique connue.

On note respectivement D5 le diamètre extérieur du rotor 82 et D6 le diamètre extérieur du corps du rotor 81. Le diamètre D5 est supérieur ou égal à la moitié du diamètre D3.

Le stator 84 est formé par un noyau de stator 85 en matériau magnétisable, plus spécifiquement en matériau ferromagnétique, qui est généralement formé par un empilage, ou paquet, de tôles et muni de garnitures isolantes. Le noyau de stator 85 comprend des éléments polaires 88 répartis sur une paroi périphérique 89 du noyau de stator 85, préférentiellement sur l'intérieur de la paroi périphérique 89 du noyau de stator 85. Le stator 84 est obtenu à partir d'un noyau de stator 85 comprenant un empilement de tôles formant chacune une circonférence fermée, sur lequel est rapporté le bobinage 87, et non par un ensemble de secteurs, à une ou plusieurs dents, bobinés qui, par leur assemblage, forment la circonférence fermée du noyau de stator 85. En effet, les faibles dimensions du moteur électrique 8 ne permettent pas de produire le stator 84 par assemblage de plusieurs secteurs angulaires bobinés.

Sur la figure 5, un seul bobinage 87 est représenté en place autour d'un seul élément polaire 88, pour la clarté du dessin.

Les éléments polaires 88 du noyau 85 sont en saillie vers l'intérieur du moteur électrique 8, à partir de la paroi périphérique 89. Avantageusement, ils sont au nombre de six, uniformément répartis sur la paroi périphérique 89, formant ainsi un stator 84 à six pôles. On appelle encoche l'espace E88 formé entre deux éléments polaires 88 adjacents. Des bobinages 87 sont positionnés dans les encoches, autour des éléments polaires 88 du stator 84. Plus précisément, chaque élément polaire 88 est entouré par un bobinage 87 qui lui est propre. Ces bobinages 87 sont tels qu'ils ont le même nombre de spires par élément polaire. Les bobinages 87 des éléments polaires diamétralement opposés sont reliés au niveau des extrémités du noyau de stator 84 pour former une phase.

Le bobinage du moteur 8 est conçu pour fonctionner sous une tension de 48 volts (V). En d'autres termes, le bobinage formé par des enroulements 86 du stator 84 est adapté pour supporter une tension de 48V.

Le bobinage 87 est constitué d'un fil de cuivre adapté pour fonctionner sous une tension de 48 volts. En d'autres termes, le diamètre du fil de cuivre utilisé pour constituer le bobinage 87 du stator 84 est adapté pour fonctionner directement sous la tension fournie par le réseau Ethernet.

Le diamètre de fil utilisé est plus petit que pour un moteur adapté à fonctionner sous 12V ou sous 24V, ce qui permet de mieux remplir les encoches du stator 84 et donc d'optimiser le rendement électrique du moteur 8.

L'actionneur 2 comprend également un connecteur 18, à huit positions et huit contacts électriques, de type RJ45 (de l'anglais « Registered Jack »). Ce connecteur 18 est communément appelé « prise RJ45 » mâle. Le connecteur 18 est relié à la carte de commande 6 par une liaison électronique 16. Le connecteur 18 peut être fixé, comme représenté sur la figure 1, au bout d'un câble sortant de l'actionneur 2. Il est destiné à être branché à un connecteur complémentaire 19, communément appelé « prise RJ45 femelle » adapté pour fournir au moteur 8, à partir du réseau Ethernet R qui appartient également à l'installation I, un courant ayant une tension d'environ 48V pour laquelle le moteur 8 est particulièrement adapté. Il n'y a donc pas nécessité d'ajouter de convertisseur entre le connecteur 18 et le moteur 8. Cela permet d'obtenir un actionneur 2 compact, économique et fiable, avec un rendement électrique optimal.

En outre, un support de couple 20, couramment appelé « tête de l'actionneur » est disposé à une extrémité du carter 4, pour la fixation de l'actionneur 2, par exemple, à une cloison non représentée. Selon une variante non représentée de l'invention, le connecteur 18 peut également être intégré au niveau du support de couple 20 de l'actionneur 2.

L'actionneur 2 comprend également une roue 22, mobile en rotation par rapport au support de couple 20 et au carter 4 de l'actionneur 2 et fixée en rotation dans l'arbre d'enroulement 26 et sur l'arbre de sortie 14. La roue 22 permet l'entraînement en rotation de l'arbre d'enroulement 26 par l'arbre de sortie 14 de l'actionneur 2, pour la montée ou la descente de l'écran 28 du store. L'actionneur 2 comprend une couronne 23, également libre en rotation par rapport au support de couple 20 et au carter 4 de l'actionneur 2 et fixée en rotation dans l'arbre d'enroulement 26. La couronne 23 forme un palier de support en rotation d'une extrémité de l'arbre d'enroulement 26 sur le carter 4 de l'actionneur 2. Pour faciliter la lecture des dessins, le tube d'enroulement 26 et l'écran 28 sont représentés en traits mixtes sur la figure 1. L'écran 28 permet d'occulter sélectivement, en totalité ou en partie, une ouverture O, telle qu'une fenêtre. Le store est formé des éléments 26 et 28.

Dans l'exemple des figures, l'écran 28 est une toile de tissu. En variante, il peut s'agir d'un assemblage de lattes.

En fonctionnement, la puissance instantanée que peut fournir le réseau Ethernet est limitée, notamment par les normes 802.3af (PoE) et 802.3at (PoE+) qui sont les plus couramment utilisées.

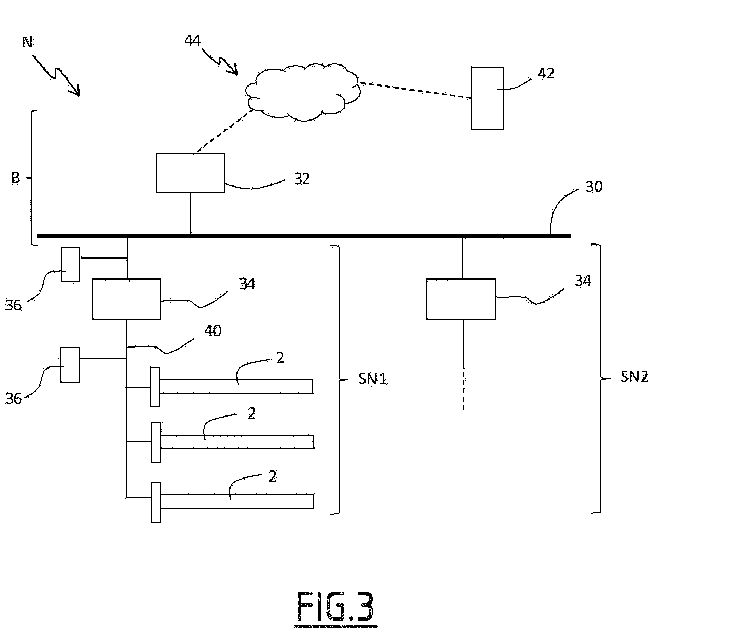

La figure 3 montre un réseau de communication N, tel qu'un réseau hiérarchique à plusieurs niveaux de hiérarchie ou rangs. Le réseau de communication N comporte un réseau principal B, qui comporte notamment un bus de données commun 30, formant une liaison physique dorsale, aussi dite « backbone » en langue anglaise, auquel une unité de commande 32 est connectée. Par exemple, la liaison 30 est une liaison câblée de type Ethernet, par exemple une liaison de type Ethernet avec un débit de 100Mbit/s ou supérieur.

Le réseau N comporte également au moins un premier sous-réseau, identifié par la référence SN1 et un deuxième sous-réseau noté SN2. Ces sous-réseaux comportent chacun un équipement réseau 34, qui est connecté à la liaison dorsale 30 et qui forme une tête de ce sous-réseau SN1 ou SN2. Il peut s'agir d'un routeur, lorsque le réseau principal B et le sous-réseau SN1 ou SN2 sont de même nature, ou d'un commutateur. Les routeurs ou commutateurs sont deux équipements réseau intermédiaires du réseau de communication N assurant le routage de paquets de données et la distribution de l'alimentation en énergie électrique. Dans l'exemple de la figure 2, deux commutateurs 34 sont connectés à la liaison dorsale 30, formant ainsi deux sous-réseaux SN1 et SN 2 distincts. Seul le sous-réseau SN1 est décrit dans ce qui suit.

Le sous-réseau SN1 contient au moins un équipement domotique du système domotique, tel qu'un ou plusieurs actionneurs électromécaniques 2, connectés à l'équipement réseau 34 correspondant par l'intermédiaire d'une liaison physique 40, de préférence câblée, telle qu'un câble Ethernet à quatre paires de fils. Par le biais du réseau de communication N, chaque équipement domotique du réseau peut ainsi être commandé par un terminal mobile 42 distant, connecté au réseau de communication N par exemple par une liaison Internet 44, et dont les ordres de commande transitent par le biais de la liaison physique dorsale 30 et par les routeurs et/ou commutateurs 34 jusqu'à l'équipement domotique. L'équipement domotique est également alimenté par l'énergie externe fournie par le câble Ethernet.

Des boîtiers de commande 36, tels que des interrupteurs, ou des télécommandes, ou des capteurs ou des terminaux de communication mobile, ou des ordinateurs tel qu'une centrale domotique, font également partie du réseau de communication N. Ils permettent de commander les équipements électriques, par exemple en transmettant des consignes de position et/ou ordres de mouvement aux actionneurs 2. Les boîtiers de commande 36 peuvent également être alimentés en énergie électrique par le réseau câblé de la liaison physique 40.

Comme représenté sur la figure 2, la carte de commande 6 de l'actionneur électromécanique 2 comporte un circuit d'alimentation électrique 62 et une unité électronique de commande 64, décrits plus en détail dans ce qui suit.

Optionnellement, le moteur 8 peut comporter un ou plusieurs capteurs 70 de position, configurés pour mesurer la position angulaire du rotor 82. Par exemple, le ou les capteurs 70 sont des capteurs magnétiques à effet Hall, coopérant avec une roue codeuse solidaire en rotation avec le rotor 82 du moteur 8 ou coopérant directement avec les aimants permanents du rotor 82, ces exemples n'étant pas limitatifs.

Le circuit d'alimentation 62 est alimenté par le réseau de communication N, incluant le sous-réseau SN1, au travers du connecteur électrique 18 et du connecteur complémentaire 19. L'alimentation en courant du circuit 62 est effectuée sous une tension électrique continue de l'ordre de 48V.

Le circuit d'alimentation 62 comprend un circuit diviseur de données et d'alimentation 90 auquel l'alimentation électrique et les données sont fournies. Le circuit diviseur 90 est adapté pour diviser les données et l'alimentation électrique transmises par les différents fils du câble Ethernet de la liaison physique 40. Le circuit diviseur de données et d'alimentation 90 comprend principalement un circuit magnétique 91 et un redresseur 92 pour redresser l'alimentation électrique divisée. Le redresseur 92 comprend notamment des diodes ou un pont de diodes ou des diodes idéales pour limiter les pertes de puissances dans le redresseur 92. Une unité de mesure de tension 93 est adaptée pour mesurer la tension à l'arrière du circuit diviseur de données et d'alimentation 90. L'unité de mesure de tension 93 comprend notamment une résistance dite de signature. L'actionneur électromécanique 2 connecté sur le réseau N est défini comme compatible avec le réseau si la signature associée à la résistance de signature, qui est de l'ordre de 25 kΩ pour un réseau PoE de standard 802.3af, est conforme aux attentes. La signature est obtenue en appliquant en entrée de l'actionneur 2 une tension faible, par exemple entre 2,7 et 10V, comme tension de mode commun. L'unité de mesure de tension 93 permet de valider la présence de la résistance de signature.

Le circuit d'alimentation 62 comprend également un circuit de négociation de classification 94. Ce circuit 94 comprend notamment une résistance de classification. Par l'application d'une première tension de classification, la quantité de courant qui est utilisée par le circuit d'alimentation 62, déterminée par la valeur de la résistance de classification, permet de déterminer de combien d'énergie électrique a besoin l'actionneur 2 et de fournir cette indication au réseau N. Alternativement, cette classification est semi-automatique ou automatique lors de la connexion de l'actionneur au réseau N.

L'actionneur comprend également un circuit contrôleur 95 dont la fonction est d'identifier l'actionneur 2 dans le sous-réseau SN1 et de négocier la classe d'alimentation avec le réseau N.

Le contrôleur 95 reçoit également les commandes issues du réseau N et transmises par le biais des connecteurs 18 et 19, au travers du circuit diviseur 90. Le circuit contrôleur 95 est également adapté pour s'interfacer avec l'unité de commande 64 pour le pilotage d'interrupteurs de puissance 63, tels que des transistors. Le circuit contrôleur 95 comprend également un convertisseur de tension, non représenté, lequel intervient pour abaisser la tension d'entrée à une tension inférieure à 10V, par exemple 6V, pour l'alimentation des composants électroniques du circuit contrôleur 95. Le convertisseur de tension n'agit pas sur la tension de puissance fournie au moteur 8, dans la mesure où le moteur 8 est adapté pour fonctionner directement sous la tension fournie par le réseau N.

L'unité de commande 64 est notamment configurée pour piloter le moteur 8 de manière à mettre en mouvement l'écran 28 pour le déplacer vers une position souhaitée.

Par exemple, l'unité de commande 64 est configurée pour piloter le moteur 8 suivant une technique de modulation de largeur d'impulsion (ou PWM pour « Pulse Width Modulation » en anglais).

Dans certains exemples, l'unité de commande est en outre configurée pour piloter le moteur 8 en tenant compte de la position angulaire du rotor 82 mesurée par le ou les capteurs 70.

L'unité de commande 64 comporte ici un circuit électronique de commande 66 comportant une interface d'entrée 67, par exemple pour recueillir les signaux de mesure provenant du ou des capteurs 70, un processeur 68 et une mémoire 72.

Par exemple, le processeur 68 est un microcontrôleur programmable ou un microprocesseur.

La mémoire 72 comporte des instructions exécutables et/ou un code logiciel pour mettre en oeuvre un procédé de pilotage de l'actionneur 2 lorsque ces instructions sont exécutées par l'unité logique de calcul.

L'unité de commande 64 peut comporter une interface 74 de sortie de signaux, par exemple pour émettre des signaux de commande pour piloter les interrupteurs de puissance du circuit de commande 62 en fonction d'ordres émis par le processeur 68.

L'unité de commande 64 peut comporter une entrée, non représentée, de réception d'ordres, pour recevoir des consignes de position et/ou des ordres de mouvement, par exemple ouvrir ou fermer l'écran 28, provenant d'un interrupteur, ou d'une télécommande, ou d'un appareil de communication mobile, ou d'un ordinateur tel qu'une centrale domotique, par exemple associée au connecteur 18. Les ordres peuvent également être reçus par le biais d'un récepteur radio de l'unité de commande, non représenté. Dans ce cas, la liaison Ethernet de la liaison physique 40 peut n'être utilisée que pour l'alimentation de l'actionneur 2 et non pas systématiquement pour le transfert de données.

Afin de limiter la puissance instantanée nécessaire que le moteur 8 doit fournir pour dérouler ou enrouler le store sur l'ensemble de sa course entre ses positions extrêmes, l'actionneur 2 comprend un ressort de compensation 24 enroulé autour du carter 4. Le ressort de compensation 24 est partiellement représenté à la figure 1. Le ressort de compensation 24 est étiré lorsque le store se déroule, c'est-à-dire lorsque l'écran 28 descend, et tend à reprendre une configuration non contrainte lorsque le store s'enroule, c'est-à-dire lorsque l'écran 28 remonte. Ainsi, le ressort de compensation 24 permet de réduire une puissance maximale Pmax fournie par le moteur 8 au cours d'un cycle de montée de l'écran 28.

Pour optimiser l'action du ressort de compensation 24, il doit être précontraint pour minimiser la puissance maximum Pmax fournie par le moteur 8 au cours d'un cycle de montée/descente de l'écran 28. La précontrainte du ressort de compensation 24 est exprimée en tours d'enroulement du ressort de compression 24 autour du carter 4. Cette précontrainte est adaptée à une raideur k_{fin} du ressort de compensation 24.

Pour une gamme de stores de largeurs et de hauteurs différentes, les raideurs et précontraintes du ressort de compensation 24 de chaque installation I peuvent être différentes. Afin de dimensionner un unique ressort 24 adapté à toute la gamme de stores, c'est-à-dire aux différentes installations possibles, le procédé décrit sur la figure 2 est mis en oeuvre. Ainsi, il n'y a pas besoin de choisir une raideur par installation I, ce qui limite les coûts de fabrication des installations I et facilite leur montage.

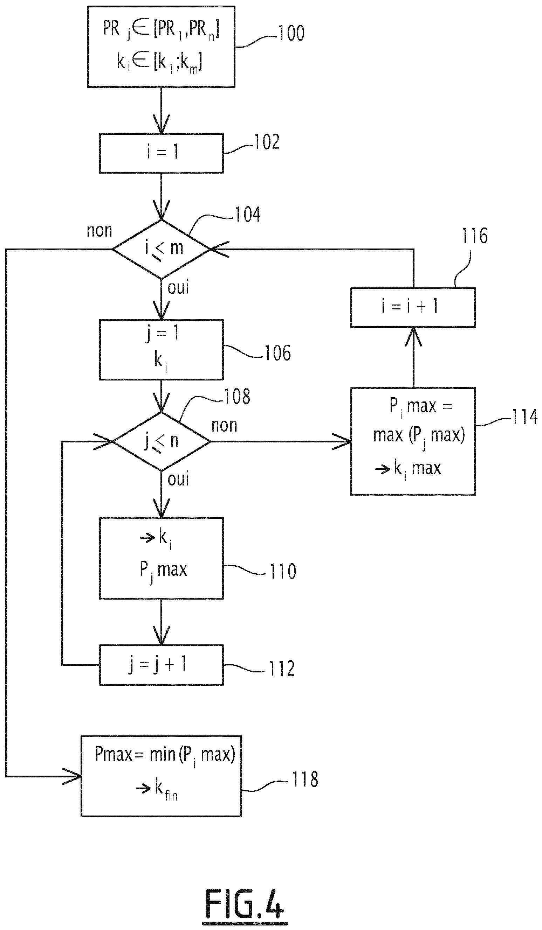

Dans une première étape 100 de ce procédé, une gamme de m raideurs de ressorts de compensation 24 est définie, m étant un nombre entier naturel supérieur ou égal à 2. Ces raideurs sont référencées, sur la figure 4, k₁ à kₘ Dans cette première étape 100, la gamme de produits est également définie. Elle comprend n produits, n étant également un nombre entier naturel supérieur ou égal à 2, c'est-à-dire n stores de hauteurs et largeurs connues, référencés PR₁ à PRₙ.

Dans une étape 102 d'initialisation, un indice i de raideur est initialisé à 1.

Ensuite, dans une étape 104, l'indice i de raideur est comparé au nombre m de raideurs de la gamme de raideurs. Si l'indice de raideur i est inférieur ou égal au nombre m de raideurs de ressort de compensation 24, alors une étape 106 est mise en œuvre.

Dans l'étape 106, un indice de produit j est initialisé à 1 et une raideur kᵢ, associée à une précontrainte est sélectionnée puis, dans une étape 108, l'indice de produit j est comparé au nombre n de produits considérés. Si l'indice de produit j est inférieur ou égal au nombre n de produits considérés, alors, dans une étape 110 est définie, pour déterminer le comportement du store, une puissance électrique Pⱼmax maximum à fournir par le moteur 8 sur un cycle de montée et de descente du store pour la précontrainte sélectionnée du ressort kᵢ. La puissance électrique Pⱼmax dépend du couple maximal à fournir en position déroulée du store et du rendement électrique du moteur 8. Cette puissance Pⱼmax est stockée dans une mémoire, tout en étant associé à la raideur kᵢ. Ensuite, dans une étape 112, l'indice de produit j est incrémenté de 1 et l'étape 108 est de nouveau mise en œuvre.

Si, dans l'étape 108, l'indice de produit j est strictement supérieur au nombre n de produits, alors une étape 114 est mise en œuvre. Dans cette étape 114, une puissance électrique maximum Pᵢmax est sélectionné, parmi toutes les puissances électriques maximum Pⱼmax précédemment calculées aux différentes étapes 110 et mises en mémoire. Pour ce faire, la puissance Pⱼmax la plus élevée est sélectionnée et sa valeur est stockée en mémoire comme valeur de puissance électrique maximum Pᵢmax, tout en étant associée à sa raideur, notée kᵢmax. Ensuite, dans une étape 116, le compteur de raideurs i est incrémenté de un et l'étape 104 est de nouveau mise en œuvre.

Si, à l'étape 104, le compteur de raideurs i est strictement supérieur au nombre m de raideurs de ressorts, une dernière étape 118 est mise en œuvre. Dans cette étape 118, la raideur finale k_{fin} est sélectionnée en choisissant, parmi les raideurs kᵢmax déterminées aux étapes 114, la raideur associée à la puissance électrique Pᵢmax la moins importante.

La raideur k_{fin} est considérée comme représentant un compromis satisfaisant pour la constante de raideur du ressort 24 des différents actionneurs 2 et correspond au ressort de compensation 24 choisi pour toute la gamme de produits PRⱼ, avec j compris entre 1 et n. Cette raideur k_{fin} permet de minimiser la puissance à fournir par le moteur 6 pour tous les modèles de la gamme de produits PRⱼ.

Par la suite, la puissance électrique à fournir par store peut être minimisée en ajustant la précontrainte du ressort dont la raideur aura été définie de manière optimale pour une gamme de stores.

Ainsi, le moteur 2 consomme relativement peu d'énergie électrique lorsqu'il manoeuvre le store, c'est-à-dire lorsqu'il déroule ou enroule l'écran 28 sur l'arbre d'enroulement 26, ce qui le rend compatible avec une alimentation en courant à partir du réseau Ethernet R de l'installation I.

L'invention est décrite ci-dessus dans le cadre d'une installation de protection solaire. Elle peut également être mise en oeuvre dans le cadre d'une installation de fermeture, où l'écran 28 assure une fonction d'obturation de l'ouverture O. Dans ce cas, l'écran 28 du store peut être une grille ou un assemblage de lames articulées entre elles.

L'invention est décrite ci-dessus dans le cas où le bobinage du stator 84 du moteur 8 est conçu pour fonctionner sous une tension de 48V. En variante, ce bobinage peut être conçu pour fonctionner sous une tension comprise entre 36V à 57V, de préférence une tension comprise entre 46V à 57V.

En variante, le circuit contrôleur 95 et l'unité de commande 64 peuvent être regroupées pour ne former qu'une seule unité.

Selon une autre variante, le circuit 95 et l'unité de commande 64 peuvent comprendre des parties communes.

Le mode de réalisation et les variantes mentionnés ci-dessus peuvent être combinés entre eux pour générer de nouveaux modes de réalisation.

## Revendications

1. Actionneur (2) électromécanique d'entraînement d'un écran mobile de fermeture ou de protection solaire, l'actionneur comprenant un moteur (8), une carte de commande (6), un réducteur (12) et un connecteur (18) de liaison à une source d'alimentation en énergie, **caractérisé en ce que** le connecteur comprend huit contacts électriques, le connecteur étant notamment de type RJ45, pour l'alimentation de l'actionneur et la transmission de données à partir d'un réseau Ethernet, le moteur étant un moteur synchrone comprenant un stator bobiné (84) et un rotor (82) à aimants permanents, le moteur étant adapté pour fonctionner directement sous la tension fournie par le réseau Ethernet, le bobinage (86) du stator étant conçu pour supporter une tension entre 36V à 57V, de préférence une tension entre 46V à 57V, en particulier une tension de 48V.

2. Actionneur (2) selon la revendication 1, **caractérisé en ce que** son diamètre maximum est inférieur à 60 mm, en particulier inférieur 50mm.

3. Actionneur (2) selon l'une des revendications 1 ou 2, **caractérisé en ce qu'**il comprend un ressort de compensation (24).

4. Actionneur (2) selon la revendication précédente, **caractérisé en ce que** le ressort de compensation (24) est précontraint, un nombre de tours de précontrainte étant adapté à une raideur (k_{fin}) du ressort de compensation (24) et déterminé pour minimiser une puissance maximale (Pmax) électrique à fournir par le moteur (8).

5. Installation (I) de fermeture ou de protection solaire comprenant un store équipé d'un écran (28) et un actionneur (2) d'entraînement d'un arbre d'enroulement (26) de l'écran, **caractérisée en ce que** l'actionneur est selon l'une des revendications précédentes.

6. Procédé de dimensionnement d'un ressort de compensation (24) pour une gamme de stores de largeurs et de hauteurs différentes, chaque store intégrant un actionneur (2) selon l'une quelconque des revendications 3 ou 4, **caractérisé en ce qu'**il comprend au moins les étapes suivantes :
• a) (100) choix de la gamme de n stores (PRᵢ) à équiper de ressorts de compensation ;
• b) (100) choix d'une gamme de m raideurs (kⱼ) de ressorts de compensation ;
• c) (110) détermination du comportement des n stores pour chaque raideur (kᵢ) dans la gamme de m raideurs ;
• d) (118) sélection, parmi les raideurs de la gamme de m raideurs, en fonction du comportement des n stores déterminé à l'étape c), d'une unique raideur (k_{fin}) adaptée à toute la gamme de stores.

7. Procédé selon la revendication 6, **caractérisé en ce que** l'étape c) comprend les sous-étapes suivantes :
• e) pour une raideur (kᵢ), calcul (110) d'une puissance maximum (Pⱼmax) à fournir par le moteur sur un cycle de montée et descente du store et stockage de cette valeur dans une mémoire pour chaque store (PRⱼ) de la gamme de store considérée ;
• f) pour chaque raideur (kᵢ), choix de la puissance électrique maximum à fournir (Pᵢmax) la plus importante parmi les puissances électriques maximum (Pⱼmax) calculées à la sous-étape e) et stockage de cette valeur, ainsi que la raideur (kᵢ) associée, dans la mémoire.

8. Procédé selon la revendication 7, **caractérisé en ce que** la raideur (k_{fin}) sélectionnée à l'étape d) (118) est la raideur associée à la puissance (Pᵢmax) la plus faible, choisie dans les raideurs de l'étape f).

9. Procédé selon l'une des revendications 6 à 8, **caractérisé en ce que** la puissance électrique maximum délivrée (Pⱼmax) pour chaque store dépend du couple maximal à fournir en position complètement déroulée du store et du rendement électrique du moteur (8).

## Patentansprüche

1. Elektromechanischer Aktuator (2) zum Antrieb eines beweglichen Verschluss- oder Sonnenschutzschirms, wobei der Aktuator einen Motor (8), eine Steuerungskarte (6), ein Untersetzungsgetriebe (12) und einen Verbinder (18) zur Verbindung mit einer Energieversorgungsquelle umfasst, **dadurch gekennzeichnet, dass** der Verbinder acht elektrische Kontakte umfasst, wobei der Verbinder insbesondere vom Typ RJ45 ist, für die Versorgung des Aktuators und die Übertragung von Daten von einem Ethernet-Netzwerk, wobei der Motor ein Synchronmotor mit einem gewickelten Stator (84) und einem Permanentmagnet-Rotor (82) ist und wobei der Motor so ausgelegt ist, dass er direkt mit der vom Ethernet-Netzwerk gelieferten Spannung betrieben werden kann, wobei die Wicklung (86) des Stators so ausgelegt ist, dass sie eine Spannung zwischen 36V und 57V, vorzugsweise eine Spannung zwischen 46V und 57V, insbesondere eine Spannung von 48V, aushält.

2. Aktuator (2) nach Anspruch 1, **dadurch gekennzeichnet, dass** sein maximaler Durchmesser kleiner als 60 mm, insbesondere kleiner als 50 mm, ist.

3. Aktuator (2) nach einem der Ansprüche 1 oder 2, **dadurch gekennzeichnet, dass** er eine Kompensationsfeder (24) umfasst.

4. Aktuator (2) nach dem vorhergehenden Anspruch, **dadurch gekennzeichnet, dass** die Kompensationsfeder (24) vorgespannt ist, wobei eine Anzahl von Vorspannumdrehungen an eine Steifheit (k_{fin}) der Ausgleichsfeder (24) angepasst ist und bestimmt wird, um eine maximale elektrische Leistung (Pmax), die von dem Motor (8) zu liefern ist, zu minimieren.

5. Schließ- oder Sonnenschutzanlage (I), die eine mit einem Schirm (28) ausgestattete Markise und einen Aktuator (2) zum Antrieb einer Wickelwelle (26) des Schirms umfasst, **dadurch gekennzeichnet, dass** der Aktuator einem der vorhergehenden Ansprüche entspricht.

6. Verfahren zur Dimensionierung einer Ausgleichsfeder (24) für eine Reihe von Jalousien mit unterschiedlichen Breiten und Höhen, wobei jede Jalousie einen Aktuator (2) nach einem der Ansprüche 3 oder 4 integriert, **dadurch gekennzeichnet, dass** es mindestens die folgenden Schritte umfasst:
• a) (100) Auswahl der Reihe von n Jalousien (PRᵢ), die mit Kompensationsfedern ausgestattet werden sollen;
• b) (100) Auswahl eines Bereichs von m Steifigkeiten (kⱼ) der Ausgleichsfedern;
• c) (110) Bestimmen des Verhaltens der n Jalousien für jede Steifigkeit (kᵢ) im Bereich von m Steifigkeiten;
• d) (118) Auswählen einer einzigen Steifigkeit (k_{fin}), die für den gesamten Bereich der Jalousien geeignet ist, aus den Steifigkeiten des Bereichs von m Steifigkeiten in Abhängigkeit von dem in Schritt c) bestimmten Verhalten der n Jalousien.

7. Verfahren nach Anspruch 6, **dadurch gekennzeichnet, dass** Schritt c) die folgenden Unteretappen enthält:
• e) für eine Steifigkeit (kᵢ), Berechnen (110) einer maximalen Leistung (Pⱼmax), die von dem Motor über einen Auf- und Abwärtszyklus der Jalousie zu liefern ist, und Speichern dieses Werts in einem Speicher für jede Jalousie (PRⱼ) des betrachteten Jalousiebereichs;
• f) für jede Steifigkeit (kᵢ) Auswahl der größten zu liefernden maximalen elektrischen Leistung (Pᵢmax) unter den in Unteretappe e) berechneten maximalen elektrischen Leistungen (Pᵢmax) und Speichern dieses Wertes sowie der zugehörigen Steifigkeit (kᵢ) in dem Speicher.

8. Verfahren nach Anspruch 7, **dadurch gekennzeichnet, dass** die in Schritt d) (118) ausgewählte Steifigkeit (k_{fin}) die Steifigkeit ist, die mit der niedrigsten Leistung (Pᵢmax) verbunden ist, die aus den Steifigkeiten in Schritt f) ausgewählt wird.

9. Verfahren nach einem der Ansprüche 6 bis 8, **dadurch gekennzeichnet, dass** die maximal abgegebene elektrische Leistung (Pⱼmax) für jede Jalousie von dem maximalen Drehmoment, das in der vollständig ausgefahrenen Position der Jalousie abgegeben werden muss, und dem elektrischen Wirkungsgrad des Motors (8) abhängt.

## Claims

1. An electromechanical actuator (2) for driving a mobile closure or sun protection screen, the actuator comprising a motor (8), a control board (6), a gear reduction assembly (12) and a connector (18) for linking to a power supply source, **characterized in that** the connector comprises eight electrical contacts, the connector being in particular of the RJ45 type, for powering the actuator and transmitting data from an Ethernet network, the motor being a synchronous motor comprising a wound stator (84) and a rotor (82) with permanent magnets, the motor being adapted to operate directly under the voltage supplied by the Ethernet network, the winding (86) of the stator being designed to withstand a voltage of between 36V and 57V, preferably a voltage of between 46V and 57V, in particular a voltage of 48V.

2. The actuator (2) according to claim 1, **characterized in that** its maximum diameter is less than 60 mm, in particular less than 50 mm.

3. The actuator (2) according to any of claims 1 or 2, **characterized in that** it comprises a compensation spring (24).

4. The actuator (2) according to the preceding claim, **characterized in that** the compensation spring (24) is preloaded, a number of preload turns being adapted to a spring rate (k_{fin}) of the compensation spring (24) and determined to minimise a maximum electrical power (Pmax) to be supplied by the motor (8).

5. A closure or sun protection system (I) comprising a blind equipped with a screen (28) and an actuator (2) for driving a winding shaft (26) of the screen, **characterized in that** the actuator is according to one of the preceding claims.

6. A method of dimensioning a compensation spring (24) for a range of blinds of different widths and heights, each blind incorporating an actuator (2) according to any of claims 3 or 4, **characterized in that** it comprises at least the following steps:
• a) (100) selecting the range of n blinds (PRᵢ) to be equipped with compensation springs;
• b) (100) selecting a range of m rates (kⱼ) of compensation springs;
• c) (110) determining the behaviour of the n blinds for each spring rate (kᵢ) in the range of m spring rates;
• d) (118) selecting a single spring rate (k_{fin}) from the range of m rates, depending on the behaviour of the n blinds determined in step c), which is suitable for the entire range of blinds.

7. The method according to claim 6, **characterized by** that step b) comprises the following successive sub-steps:
• e) for a spring rate (kᵢ), calculating (110) a maximum power (Pⱼmax) to be supplied by the motor over one up and down cycle of the blind and storage of this value in a memory for each blind (PRⱼ) of the range of blinds considered;
• f) for each spring rate (kᵢ), selecting the maximum electrical power to be supplied (Pᵢmax) which is the greatest among the maximum electrical powers (Pⱼmax) calculated in sub-step e) and storing this value, together with the associated spring rate (kᵢ), in the memory.

8. The method according to claim 7, **characterized in that** the spring rate (k_{fin}) selected in step d) (118) is the spring rate associated with the lowest power (Pᵢmax), selected from the spring rates of step f).

9. The method according to one of claims 6 to 8, **characterized in that** the maximum electrical power delivered (Pⱼmax) for each blind depends on the maximum torque to be provided in the fully unwound position of the blind and the electrical efficiency of the motor (8).
